# EUROPEAN PATENT APPLICATION

(11) **EP 4 718 922 A1**
(43) Date of publication of application: **01.04.2026**
(21) Application number: 24810826.8
(22) Date of filing: 24.04.2024
(51) Int. Cl.: H04W 64/00, H04W 56/00, H04W 84/06

(54) **TERMINAL, BASE STATION, WIRELESS COMMUNICATION SYSTEM, AND WIRELESS COMMUNICATION METHOD**

(30) Priority: 22.05.2023 JP 2023083638
(71) Applicant: NTT DOCOMO, INC., Tokyo 100-6150 (JP)
(72) Inventor: YOSHIOKA Shohei, Tokyo 100-6150 (JP); NAGATA Satoshi, Tokyo 100-6150 (JP); YOU Luhua, Beijing 100190 (CN); SUN Weiqi, Beijing 100190 (CN); WANG Jing, Beijing 100190 (CN); CHEN Lan, Beijing 100190 (CN)
(74) Representative: Hoffmann Eitle
(86) International application number: PCT/JP2024/015987
(87) International publication number: WO 2024/241818

(57) **Abstract**

A terminal includes a communication unit that performs communication of a reference signal via a non-terrestrial network; and a control unit that performs, in a specific control for estimating position information of the terminal based on the reference signal, a specific operation relating to improving an accuracy of the specific control.

## Description

### Technical Field

The present disclosure relates to a terminal, a base station, a radio communication system, and a radio communication method for estimating the position information of the terminal.

### Background Art

The 3rd Generation Partnership Project (3GPP) has prepared a specification for the 5th generation mobile communication system (which may be called 5G, New Radio (NR), or Next Generation (NG)), and is also in the process of specifying the next generation called Beyond 5G, 5G Evolution, or 6G.

The 3GPP specifies techniques for estimating the position information of a terminal (hereinafter, UE; User Equipment), using a method such as Multi-RTT (Round Trip Time), DL-TDOA (Downlink Time Difference of Arrival), DL-AoD (Downlink Angle of Departure), UL-TDOA (Uplink Time Difference of Arrival), UL-AoA (Uplink Angle of Arrival) and E-CID (Enhanced Cell ID) (for example, Non-Patent Literature 1).

In addition, in 3GPP, NTN (Non-Terrestrial Network) is being studied. In NTN, a non-terrestrial network such as an artificial satellite (hereinafter, a satellite) is used to provide services to areas that cannot be covered by a terrestrial network due to factors such as cost.

### Citation List

### Non-Patent Literature

Non-Patent Literature 1: 3GPP TS38.305 V17.4.0 March 2023

### Summary of Invention

In the above technique for estimating the position information of the UE, the UE reports a UE Rx-Tx time difference. The UE Rx-Tx time difference is assumed to be reported using Multi-RTT or similar methods. Similarly, the UE reports a DL RSTD (Reference Signal Time Difference) . The DL RSTD is assumed to be reported using DL-TDOA or similar methods.

Here, the UE Rx-Tx time difference and DL RSTD are derived from an SFN (System Frame Number)/subframe index.

Under such circumstances, the inventors have found that, in NTN, the position information of the UE cannot be appropriately estimated because the UL subframe duration changes due to autonomous TA (Timing Advance) adjustment of the UE, and this duration is unknown to the gNB/LMF (Location Management Function). Similarly, the inventors have found that, in NTN, the position information of the UE cannot be appropriately estimated because the DL subframe duration changes due to the movement of a satellite, and this duration is unknown to the gNB/LMF.

Therefore, the present invention has been made in order to solve the problems described above, and an object of the present invention is to provide a terminal, a base station, a radio communication system, and a radio communication method for enabling the position information of UE to be appropriately estimated.

An aspect of the present disclosure is a terminal including: a communication unit that performs communication of a reference signal via a non-terrestrial network; and a control unit that performs, in a specific control for estimating position information of the terminal based on the reference signal, a specific operation relating to improving an accuracy of the specific control.

An aspect of the present disclosure is a base station including: a communication unit that performs communication of a reference signal via a non-terrestrial network; and a control unit that assumes that a terminal performs, in a specific control for estimating position information of the terminal based on the reference signal, a specific operation relating to improving an accuracy of the specific control.

An aspect of the present disclosure is a radio communication system including a terminal and a base station, in which the terminal includes: a communication unit that performs communication of a reference signal via a non-terrestrial network; and a control unit that performs, in a specific control for estimating position information of the terminal based on the reference signal, a specific operation relating to improving an accuracy of the specific control.

An aspect of the present disclosure is a radio communication method including: a step of performing communication of a reference signal via a non-terrestrial network; and a step of performing, in a specific control for estimating position information of a terminal based on the reference signal, a specific operation relating to improving an accuracy of the specific control.

### Brief Description of Drawings

[FIG. 1] FIG. 1 is an overall schematic configuration diagram of a radio communication system 10.
[FIG. 2] FIG. 2 is a diagram illustrating frequency ranges used in the radio communication system 10.
[FIG. 3] FIG. 3 is a diagram illustrating a configuration example of a radio frame, a sub-frame, and a slot used in the radio communication system 10.
[FIG. 4] FIG. 4 is a functional block diagram of a UE 200.
[FIG. 5] FIG. 5 is a functional block diagram of a gNB 100.
[FIG. 6] FIG. 6 is a functional block diagram of an LMF 300.
[FIG. 7] FIG. 7 is a diagram for explaining a protocol.
[FIG. 8] FIG. 8 is a diagram for explaining a problem.
[FIG. 9] FIG. 9 is a diagram for explaining operation example 2.
[FIG. 10] FIG. 10 is a diagram illustrating an example of a hardware configuration of the gNB 100 and the UE 200.
[FIG. 11] FIG. 11 is a diagram illustrating a configuration example of a vehicle 2001.

### Description of Embodiments

An embodiment will be described below with reference to the drawings. Note that the same or similar reference numerals have been attached to the same functions and configurations, and a description thereof will be omitted as appropriate.

### [Embodiment]

### (1) Overall schematic configuration of radio communication system

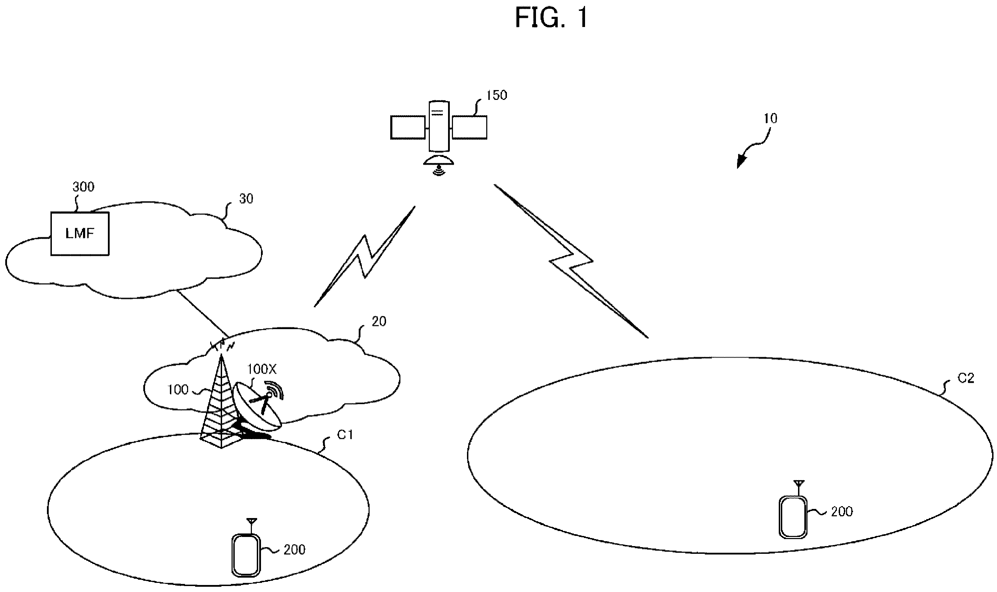

FIG. 1 is an overall schematic configuration diagram of a radio communication system 10 according to an embodiment. The radio communication system 10 is a radio communication system according to 5G New Radio (NR), and includes a Next Generation-Radio Access Network 20 (hereinafter, NG-RAN 20) and a terminal 200 (hereinafter, UE (User Equipment) 200).

Note that, the radio communication system 10 may be a radio communication system according to a scheme called Beyond 5G, 5G Evolution, or 6G.

The NG-RAN 20 includes a base station 100 (hereinafter, gNB 100). Note that, the specific configuration of the radio communication system 10 including the number of gNBs 100 and UEs 200 is not limited to that of the example illustrated in FIG. 1.

The NG-RAN 20 actually includes multiple NG-RAN Nodes, specifically, gNBs (or ng-eNBs), and is connected to a core network 30 (for example, 5GC) according to 5G. Note that, the NG-RAN 20 and the core network 30 may be simply expressed as a "network".

The gNB 100 is a radio base station according to 5G, and performs radio communication with the UE 200 according to 5G. The gNB 100 and the UE 200 can be compatible with Massive MIMO (Multiple-Input Multiple-Output) that generates a beam BM with higher directivity by controlling radio signals transmitted from multiple antenna elements, carrier aggregation (CA) that uses multiple component carriers (CCs) in a bundle, dual connectivity (DC) that communicates with two or more transport blocks at the same time between the UE and each of two NG-RAN Nodes, and the like.

The core network 30 includes a network device 300. The network device 300 may include an LMF (Location Management Function). The network device 300 may include an AMF (Access and Mobility management Function). The network device 300 may be an E-SMLC (Evolved Serving Mobile Location Centre). In the following description, a case in which the network device 300 is an LMF 300 will be mainly described.

In the embodiment, a non-terrestrial network (hereinafter, NTN) is assumed. In NTN, a non-terrestrial network such as an artificial satellite 150 (hereinafter, satellite 150) is used to provide services to areas that cannot be covered by a terrestrial network (hereinafter, TN) due to factors such as cost. NTN can provide more reliable services. For example, NTN is assumed to be applied to IoT (inter of things), ships, buses, trains, and critical communications. Further, NTN has scalability according to efficient multicasting or broadcasting.

Note that, the network including the gNB 100 and the UE 200, but not including the satellite 150, may be referred to as a terrestrial network (TN) in contrast to NTN.

The gNB 100 has an NTN gateway 100X. The NTN gateway 100X transmits downlink signals to the satellite 150. The NTN gateway 100X receives uplink signals from the satellite 150. The gNB 100 has a cell C1 as a coverage area.

The satellite 150 relays to the UE 200, the downlink signals received from the NTN gateway 100X. The satellite 150 relays to the NTN gateway 100x, the uplink signals received from the UE 200. The satellite 150 has a cell C2 as a coverage area. The satellite 150 may be considered to be a TRP (Transmission-Reception Point).

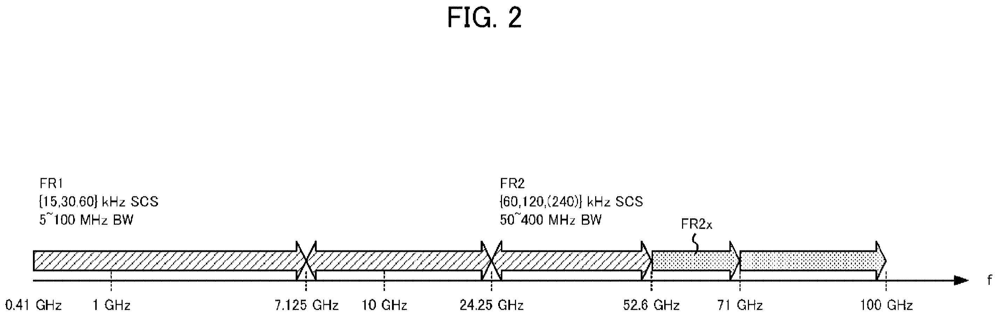

In addition, the radio communication system 10 is compatible with multiple frequency ranges (FRs). FIG. 2 is a diagram illustrating frequency ranges used in the radio communication system 10.

As illustrated in FIG. 2, the radio communication system 10 is compatible with an FR1 and an FR2. The frequency bands of the respective FRs are as follows.

- FR1: 410 MHz to 7.125 GHz
- FR2: 24.25 GHz to 52.6 GHz

In the FR1, Sub-Carrier Spacing (SCS) of 15, 30, or 60 kHz may be used, and a bandwidth (BW) of 5 to 100 MHz may be used. The FR2 has a higher frequency than the FR1, and the SCS of 60 or 120 kHz (240 kHz may be included) may be used, and the bandwidth (BW) of 50 to 400 MHz may be used.

Note that, the SCS may be interpreted as numerology. The numerology is defined in 3GPP TS38.300 and corresponds to one sub-carrier spacing in a frequency domain.

Further, the radio communication system 10 is also compatible with a higher frequency band than the FR2 frequency band. Specifically, the radio communication system 10 is compatible with a frequency band exceeding 52.6 GHz and up to 71 GHz or 114.25 GHz. Such a high frequency band may be referred to as "FR2x" for convenience.

In order to solve the problem that the influence of phase noise becomes larger in the high frequency band, in the case of using a band exceeding 52.6 GHz, Cyclic Prefix-Orthogonal Frequency Division Multiplexing (CP-OFDM)/ Discrete Fourier Transform-Spread (DFT-S-OFDM) having larger Sub-Carrier Spacing (SCS) may be applied.

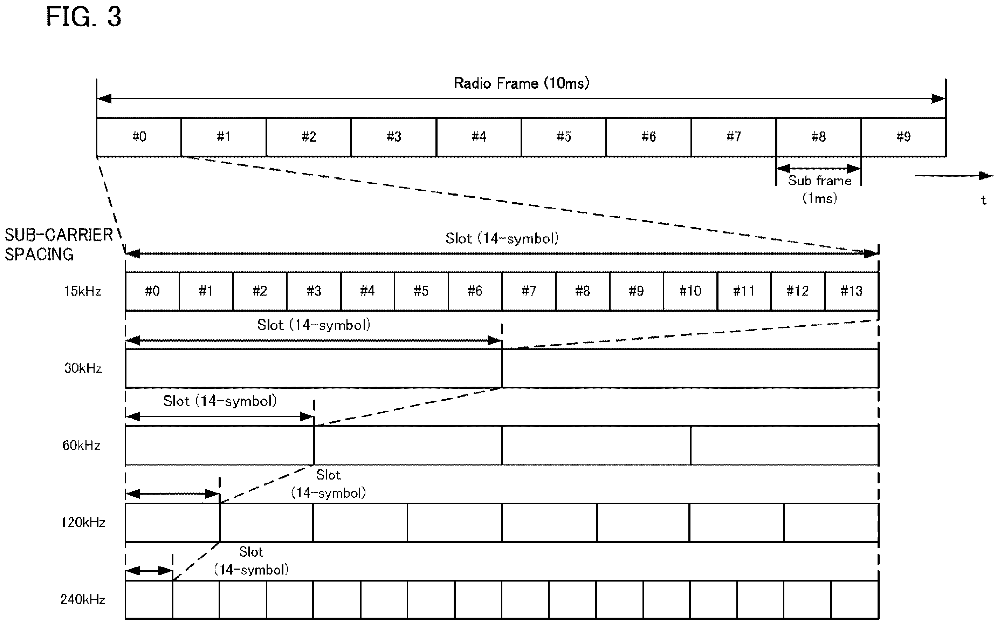

FIG. 3 is a diagram illustrating a configuration example of a radio frame, a subframe, and a slot used in the radio communication system 10.

As illustrated in FIG. 3, one slot includes 14 symbols, and a symbol period (and a slot period) becomes shorter as the SCS becomes larger (wider). The SCS is not limited to the spacing (frequency) illustrated in FIG. 3. For example, 480 kHz, 960 kHz, or the like may be used.

In addition, the number of symbols constituting one slot is not necessarily 14 symbols (for example, 28 symbols or 56 symbols). Further, the number of slots per subframe may be different depending on the SCS.

Note that, a time direction (t) illustrated in FIG. 3 may be referred to as a time domain, a symbol period, a symbol time, or the like. In addition, a frequency direction may be referred to as a frequency domain, a resource block, a subcarrier, a bandwidth part (BWP: Bandwidth Part), or the like.

A DMRS is a kind of reference signal, and is prepared for various channels. Here, unless otherwise specified, it may mean a downlink data channel, specifically, a DMRS for PDSCH (Physical Downlink Shared Channel). However, an uplink data channel, specifically, a DMRS for PUSCH (Physical Uplink Shared Channel) may be construed as being similar to a DMRS for PDSCH.

The DMRS may be used in a device, for example, in the UE 200 for channel estimation as a part of coherent demodulation. The DMRS may exist only in resource blocks (RBs) used for PDSCH transmission.

The DMRS may have multiple mapping types. Specifically, the DMRS has a mapping type A and a mapping type B. In the mapping type A, the first DMRS is allocated in the second or third symbol of a slot. In the mapping type A, the DMRS may be mapped based on a boundary between slots regardless of where the actual data transmission starts in a slot. The reason why the first DMRS is allocated in the second or third symbol of a slot may be construed as for the purpose of allocating the first DMRS after control resource sets (CORESET).

In the mapping type B, the first DMRS may be allocated in the first symbol of data assignment. In other words, the DMRS may be given relatively to a location where data is allocated, not to the boundary between slots.

Further, the DMRS may have multiple types (Types). Specifically, the DMRS has a Type 1 and a Type 2. The Type 1 and Type 2 are different in mapping in a frequency domain and the maximum number of orthogonal reference signals. The Type 1 can output up to four orthogonal signals in a single-symbol DMRS, and the Type 2 can output up to eight orthogonal signals in a double-symbol DMRS.

### (2) Functional block configuration of radio communication system

Next, a functional block configuration of the radio communication system 10 will be described.

First, a functional block configuration of the UE 200 will be described.

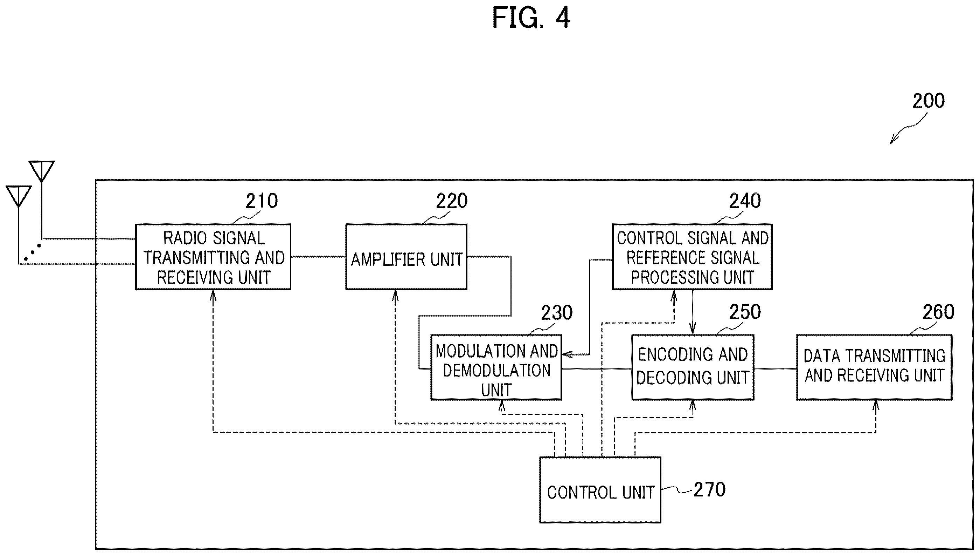

FIG. 4 is a functional block diagram of the UE 200. As illustrated in FIG. 4, the UE 200 includes a radio signal transmitting and receiving unit 210, an amplifier unit 220, a modulation and demodulation unit 230, a control signal and reference signal processing unit 240, an encoding and decoding unit 250, a data transmitting and receiving unit 260, and a control unit 270.

The radio signal transmitting and receiving unit 210 transmits and receives a radio signal according to NR. The radio signal transmitting and receiving unit 210 deals with Massive MIMO, CA that uses multiple CCs in a bundle, DC that performs communication at the same time between the UE and each of two NG-RAN Nodes, and the like.

The amplifier unit 220 includes a PA (Power Amplifier)/LNA (Low Noise Amplifier) and the like. The amplifier unit 220 amplifies a signal output from the modulation and demodulation unit 230 to a predetermined power level. In addition, the amplifier unit 220 amplifies an RF signal output from the radio signal transmitting and receiving unit 210.

The modulation and demodulation unit 230 executes data modulation and demodulation, transmission power setting, resource block assignment, and the like for each predetermined communication destination (gNB 100 or another gNB). In the modulation and demodulation unit 230, Cyclic Prefix-Orthogonal Frequency Division Multiplexing (CP-OFDM)/Discrete Fourier Transform-Spread (DFT-S-OFDM) may be applied. Further, DFT-S-OFDM may be used not only for uplink (UL) but also for downlink (DL).

The control signal and reference signal processing unit 240 executes processing relating to various control signals transmitted and received by the UE 200, and processing relating to various reference signals transmitted and received by the UE 200.

Specifically, the control signal and reference signal processing unit 240 receives various control signals transmitted from the gNB 100 via a predetermined control channel, for example, a control signal of a radio resource control layer (RRC). Further, the control signal and reference signal processing unit 240 transmits various control signals to the gNB 100 via a predetermined control channel.

The control signal and reference signal processing unit 240 executes processing using a reference signal (RS) such as a Demodulation Reference Signal (DMRS) and a Phase Tracking Reference Signal (PTRS).

The DMRS is a known terminal-specific reference signal (pilot signal) between the base station and the terminal for estimating a phasing channel used for data demodulation. The PTRS is a terminal-specific reference signal designed for the purpose of estimating phase noise that becomes a problem in a high frequency band.

Note that, the reference signal may include a Channel State Information-Reference Signal (CSI-RS), a Sounding Reference Signal (SRS), and a Positioning Reference Signal (PRS) for position information, in addition to the DMRS and the PTRS.

In addition, the channel includes a control channel and a data channel. The control channel includes a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

In addition, the data channel includes a PDSCH (Physical Downlink Shared Channel), a PUSCH (Physical Uplink Shared Channel), and the like. The data means the data transmitted via the data channel. The data channel may be read as a shared channel.

Here, the control signal and reference signal processing unit 240 may receive downlink control information (DCI). The DCI includes, as existing fields, fields for storing DCI Formats, Carrier indicator (CI), BWP indicator, FDRA (Frequency Domain Resource Assignment), TDRA (Time Domain Resource Assignment), MCS (Modulation and Coding Scheme), HPN (HARQ Process Number), NDI (New Data Indicator), RV (Redundancy Version), and the like.

A value stored in the DCI Format field is an information element specifying the format of the DCI. A value stored in the CI field is an information element specifying a CC for which the DCI is applied. A value stored in the BWP indicator field is an information element specifying a BWP for which the DCI is applied. The BWP that can be specified by the BWP indicator is configured by an information element (BandwidthPart-Config) included in an RRC message. A value stored in the FDRA field is an information element specifying a frequency domain resource for which the DCI is applied. The frequency domain resource is identified by a value stored in the FDRA field and an information element (RA Type) included in the RRC message. A value stored in the TDRA field is an information element specifying a time domain resource for which the DCI is applied. The time domain resource is identified by a value stored in the TDRA field and an information element (pdsch-TimeDomainAllocationList, pusch-TimeDomainAllocationList) included in the RRC message. The time domain resource may be identified by a value stored in the TDRA field and a default table. A value stored in the MCS field is an information element specifying an MCS for which the DCI is applied. The MCS is identified by a value stored in the MCS and an MCS table. The MCS table may be specified by the RRC message, or may be identified by RNTI scrambling. A value stored in the HPN field is an information element specifying a HARQ Process for which the DCI is applied. A value stored in the NDI is an information element for identifying whether data for which the DCI is applied is first transmission data. A value stored in the RV field is an information element specifying redundancy of data for which the DCI is applied.

In the embodiment, the control signal and reference signal processing unit 240 constitutes a communication unit that performs communication of a reference signal via NTN. The reference signal may include a downlink reference signal. The downlink reference signal may be referred to as a DL-PRS (Downlink Positioning Reference Signal). The reference signal may include an uplink reference signal. The uplink reference signal may be referred to as a UL-SRS (Sounding Reference Signal).

The encoding and decoding unit 250 performs data division and coupling, channel coding and decoding, and the like for each predetermined communication destination (gNB 100 or another gNB).

Specifically, the encoding and decoding unit 250 divides data output from the data transmitting and receiving unit 260 into predetermined sizes, and performs channel coding on the divided data. Further, the encoding and decoding unit 250 decodes data output from the modulation and demodulation unit 230 and couples the decoded data.

The data transmitting and receiving unit 260 transmits and receives a Protocol Data Unit (PDU) and a Service Data Unit (SDU). Specifically, the data transmitting and receiving unit 260 performs assembly and disassembly of the PDU and SDU in multiple layers (a media access control layer (MAC), a radio link control layer (RLC), a packet data convergence protocol layer (PDCP), and the like). In addition, the data transmitting and receiving unit 260 performs error correction and retransmission control of data on the basis of HARQ (Hybrid Automatic Repeat Request).

The control unit 270 controls each functional block constituting the UE 200. In the embodiment, the control unit 270 constitutes a control unit that performs, in a specific control for estimating the position information of the UE 200 based on the reference signal, a specific operation relating to improving the accuracy of the specific control. The specific operation may be a specific operation relating to the autonomous timing advance (hereinafter, TA) adjustment of the UE 200. The specific operation may be a specific operation relating to the movement of the satellite 150.

The specific control may include Multi-RTT (Round Trip Time) Positioning. The specific control may include DL-TDOA (Downlink Time Difference of Arrival) Positioning.

Second, a functional block configuration of the gNB 100 will be described.

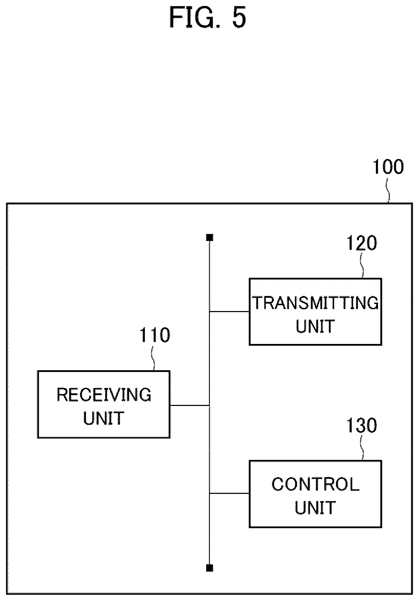

FIG. 5 is a functional block diagram of the gNB 100. As illustrated in FIG. 5, the gNB 100 includes a receiving unit 110, a transmitting unit 120, and a control unit 130.

The receiving unit 110 receives various signals from the UE 200. The receiving unit 110 may receive UL signals via PUCCH or PUSCH.

The transmitting unit 120 transmits various signals to the UE 200. The transmitting unit 120 may transmit DL signals via PDCCH or PDSCH.

In the embodiment, the receiving unit 110 and the transmitting unit 120 constitute a communication unit that performs communication of a reference signal via NTN.

The control unit 130 controls the gNB 100. In the embodiment, the control unit 130 constitutes a control unit that assumes that the UE 200 performs, in a specific control for estimating the position information of the UE 200 based on a reference signal, a specific operation relating to improving the accuracy of the specific control. The specific operation may be a specific operation relating to the autonomous timing advance (hereinafter, TA) adjustment of the UE 200. The specific operation may be a specific operation relating to the movement of the satellite 150.

Third, a functional block configuration of the LMF 300 will be described.

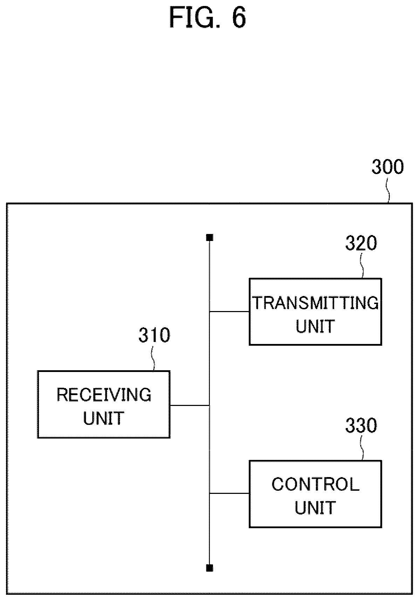

FIG. 6 is a functional block diagram of the LMF 300. As illustrated in FIG. 6, the LMF 300 includes a receiving unit 310, a transmitting unit 320, and a control unit 330.

The receiving unit 310 may receive a message such as a measurement result relating to a first specific control from the UE 200. The message may be referred to as LPP Provide Position information. The receiving unit 310 may receive a message such as a measurement result relating to a second specific control from the gNB 100. The message may be referred to as NRPPa (NR Positioning Protocol A) message (Type: Measurement Report). The receiving unit 310 may receive from the gNB 100 a message which is used for measurement relating to the second specific control. The message may be referred to as an NRPPa message (Type: POSITIONING INFORMATION REQUEST).

The transmitting unit 320 may transmit to the UE 200 a message which is used for measurement relating to the specific control. The message may be referred to as LPP Provide Assistance Data. The transmitting unit 320 may transmit to the gNB 100 a message which requests the measurement relating to the specific control. The message may be referred to as an NRPPa message (Type: Measurement Request) .

The control unit 330 controls the LMF 300. For example, the control unit 330 may perform a specific control (Multi-RTT Positioning) for estimating the position information of the UE 200 based on the UE Rx-Tx time difference. The control unit 330 may perform a specific control (DL-TDOA Positioning) for estimating the position information of the UE 200 based on the DL-RSTD (Reference Signal Time Difference).

### (3) Protocol

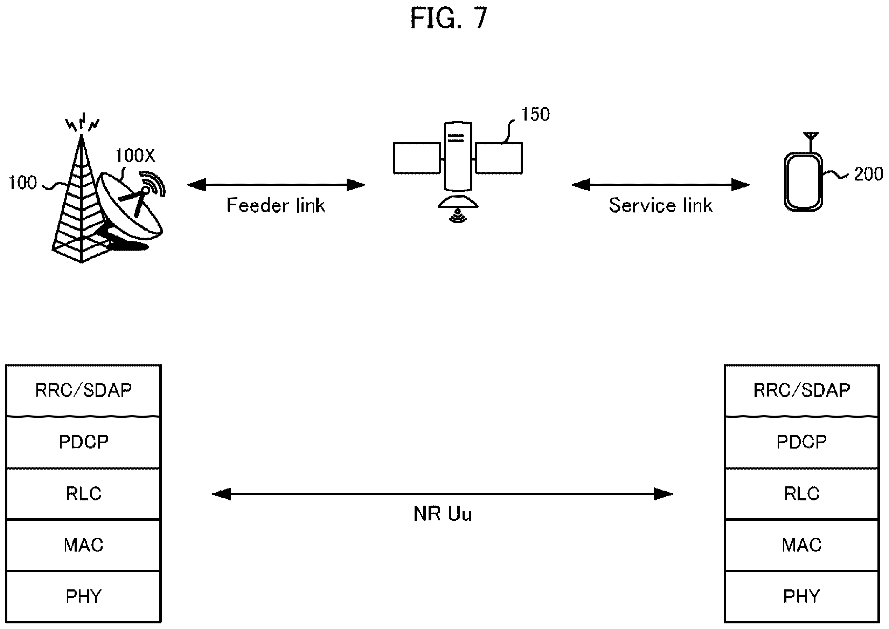

As illustrated in FIG. 7, the gNB 100 has protocol stacks such as PHY, MAC, RLC, PDCP, and RRC/SDAP. Similarly, the UE 200 has protocol stacks such as PHY, MAC, RLC, PDCP, and RRC/SDAP. The satellite 150 relays communication between the gNB 100 and the UE 200.

Here, the link between the gNB 100 (NTN Gateway 100X) and the satellite 150 may be referred to as a Feeder link. The link between the satellite 150 and the UE 200 may be referred to as a Service link. The interface between the gNB 100 and the UE 200 may be referred to as NR Uu.

As an assumption for the network architecture of NTN, FDD or TDD may be adopted. The cells on the ground may be fixed or movable. The UE 200 may have the capability to support a GNSS (Global Navigation Satellite System). As for the UE 200, in FR1, a handheld device of power class 3 may be assumed, and at least in FR2, a VSAT (Very small aperture terminal) may be assumed.

The network architecture of NTN may assume regenerative payload. For example, the functions of gNB 100 may be installed on a satellite or an aircraft. In addition, the gNB-DU (Distributed Unit) may be installed on a satellite or an aircraft, and the gNB-CU (Central Unit) may be provided as a ground station.

### (4) Problem

Next, the problem of the embodiment will be described.

Specifically, the UE Rx-Tx time difference and DL RSTD described above are derived from the SFN (System Frame Number)/subframe index. The UE Rx-Tx time difference may be derived from a time stamp which is the time of transmission/reception of the reference signal represented by SFN/slot number.

Under such circumstances, the inventors have found that, in NTN, the position information of the UE 200 cannot be appropriately estimated because the UL subframe duration changes due to the autonomous TA adjustment of the UE 200, and this duration is unknown to the gNB 100/LMF 300. Similarly, the inventors have found that, in NTN, the position information of the UE 200 cannot be appropriately estimated because the DL subframe duration changes due to the movement of the satellite 150, and this duration is unknown to the gNB 100/LMF 300.

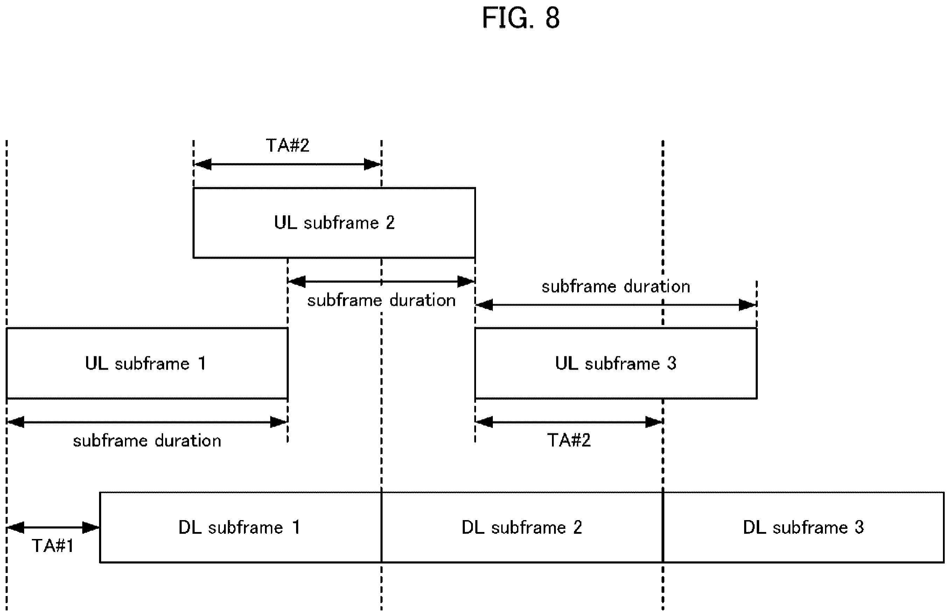

For example, as illustrated in FIG. 8, it is assumed that the TA changes from TA#1 to TA#2 due to the autonomous TA adjustment of the UE 200. Here, the case where TA#2 is larger than TA#1 is exemplified. In such a case, the subframe duration corresponding to the UL subframe 2 is assumed to be shorter than the subframe duration corresponding to the UL subframe 1. Similarly, the subframe duration corresponding to the UL subframe 3 is assumed to be longer than the subframe duration corresponding to the UL subframe 2.

Under such assumptions, even if the UE Rx-Tx time difference is reported, the transmission time of the UL-SRS indicated by the UL subframe cannot be appropriately specified, and thus the position information of the UE 200 cannot be appropriately estimated based on the UE Rx-Tx time difference.

As described above, it is necessary to consider controlling/reducing the influence of the autonomous TA adjustment of the UE 200 on Multi-RTT Positioning in NTN. Similarly, the influence on DL-TDOA Positioning in NTN needs to be considered.

### (5) Operation examples

Next, operation examples of the embodiment will be described in consideration of the above problems. The following operation examples are considered.

### (5.1) Operation example 1

In operation example 1, a rule or criterion is defined for measurements on the UE 200 side. The measurements on the UE 200 side may include the UE Rx-Tx time difference in an NTN scenario or the DL RSTD in an NTN scenario. The rule or criterion may be read as a specific restriction relating to the autonomous TA adjustment of the UE 200. That is, the specific operation described above may be considered to be an operation based on the specific restriction relating to the autonomous TA adjustment of the UE 200. For the specific restriction, the following options can be considered.

In option 1-1, the specific restriction may be a restriction on a time duration or/and offset between two DL-PRS/UL-SRS measurements. Since the restriction on the time duration or/and offset between two DL-PRS/UL-SRS measurements affects the autonomous TA adjustment of the UE 200, it may be considered to be an example of a restriction on the autonomous TA adjustment of the UE 200.

For example, regarding the UE Rx-Tx time difference, the specific restriction may be a restriction in which the DL-PRS subframe and UL-SRS subframe measurements are performed within a time duration or/and offset of X ms. X may be +160 ms, -160 ms, or a new value defined for the NTN scenario.

For example, regarding the DL RSTD, the specific restriction may be a restriction in which two DL-PRS subframe measurements are made within a time duration or/and offset of Y ms. Y may be 160 ms, 1280 ms, or a new value defined for the NTN scenario.

In option 1-2, the specific restriction may be a restriction in which the UE 200 does not perform an autonomous TA adjustment during the measurement period of the reference signal.

For example, the autonomous TA adjustment value of the UE 200 may not be updated after the measurement of the UE 200 (for example, UE Rx-Tx time difference or DL RSTD) starts.

In operation example 1, the specific restriction may be predefined in the radio communication system 10, or may be notified from the LMF 300 to the UE 200 via LPP, or may be notified from the gNB 100 to the UE 200 using DCI/MAC CE/RRC.

According to operation example 1, the influence on the estimation of the position information of the UE 200 due to the autonomous TA adjustment of the UE 200 can be suppressed.

### (5.2) Operation example 2

In operation example 2, the UE 200 performs a specific report relating to the autonomous TA adjustment of the UE 200. The specific operation described above may be considered to be a specific report relating to the autonomous TA adjustment of the UE 200. For the specific report, the following options can be considered.

In option 2-1, the UE 200 reports the autonomous TA adjustment value of the UE 200 to the LMF 300 via the LPP. For option 2-1, the following options can be considered.

In option 2-1-1, the UE 200 reports the TA value that is applied to each UL subframe. The TA value may be a TA value that is applied to each UL subframe used in the measurement of the UE Rx-Tx time difference.

In option 2-1-2, the UE 200 reports the difference in the TA values between the UL subframes. For option 2-1-2, the following options can be considered.

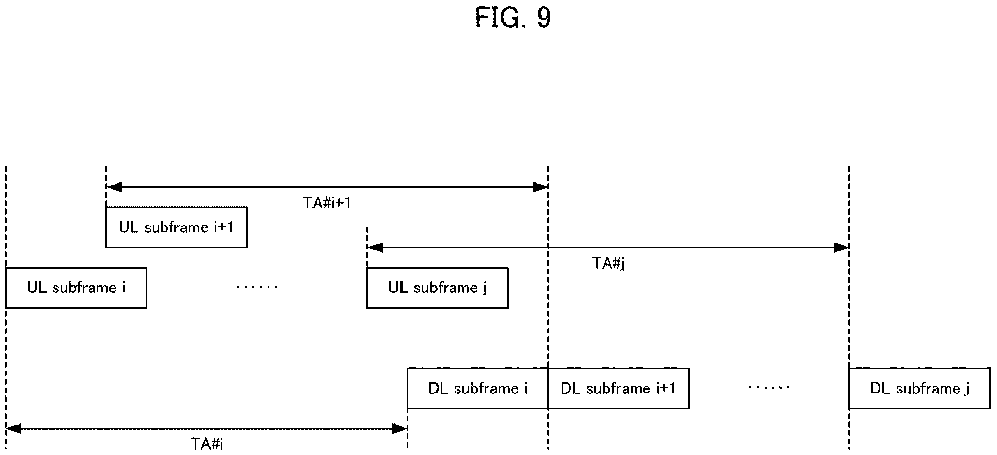

In option 2-1-2-1, the UE 200 reports the difference in the TA values between the adjacent UL subframes (hereinafter, ΔTA) for each UL subframe. For example, when assuming the case illustrated in FIG. 9, ΔTA may be (TA#i+1 - TA#i), (TA#i+2 - TA#i+1), ..., (TA#j - TA#j-1).

In option 2-1-2-2, the UE 200 reports the sum of the differences (ΔTA) in the TA values between the subframes (hereinafter, ΣΔTA). ΔTA is the difference in the TA values between the adjacent UL subframes. For example, when assuming the case illustrated in FIG. 9, ΣΔTA may be {(TA#i+1 - TA#i) + (TA#i+2 - TA#i+1) + ... + (TA#j - TA#j-1)}.

In option 2-1-3, the UE 200 may report the drift rate (variation rate) of the TA value that is applied to each UL subframe.

In option 2-2, the UE 200 reports a UL subframe variation (change value of UL subframe) to the LMF 300 via LPP. Since the UL subframe variation is affected by the autonomous TA adjustment of the UE 200, it may be considered as an example of a specific report relating to the autonomous TA adjustment of the UE 200. For option 2-2, the following options can be considered.

In option 2-2-1, the UE 200 reports the duration/length of each UL subframe. The UL subframes may be the respective UL subframes used in the measurement of the UE Rx-Tx time difference.

In option 2-2-2, the UE 200 reports the duration/length of any of the UL subframes. The UL subframes may be the respective UL subframes used in the measurement of the UE Rx-Tx time difference. The UE Rx-Tx time difference can be roughly estimated from the duration/length of the reported UL subframe.

In option 2-2-3, the UE 200 reports the difference in the duration/length of each UL subframe. For option 2-2-3, the following options can be considered.

In option 2-2-3-1, the UE 200 reports the difference in the duration/length between the adjacent UL subframes for each UL subframe (hereinafter, ΔT_subframe).

In option 2-1-2-2, the UE 200 reports the sum of the differences (ΔT_subframe) in the duration/length of the UL subframes (hereinafter, ΣΔT_subframe). ΔT_subframe is the difference in the TA values between the adjacent UL subframes.

In option 2-2-4, the UE 200 may report the drift rate (variation rate) of the duration/length for each UL subframe.

In option 2-2-5, the UE 200 reports the difference in the duration/length between each UL subframe and the normative subframe. The normative subframe serves as the reference subframe, and the duration/length of the normative subframe may be 1 ms. For option 2-2-5, the following options can be considered.

In option 2-2-5-1, the UE 200 may report the difference in the duration/length between the UL subframe and the normative subframe for each UL subframe. For example, when assuming the case illustrated in FIG. 9, the difference in the duration/length between the UL subframe and the normative subframe may be (1 ms - subframe_duration#i), (1 ms - subframe_duration#i+1), ..., (1 ms - subframe_duration#j). Note that the subframe_duration#n represents the duration/length corresponding to the UL subframe n.

In option 2-2-5-2, the UE 200 reports the sum of the differences in the duration/length between the UL subframe and the normative subframe. The sum of the differences may be {(1 ms - subframe_duration#i) + (1 ms - subframe_duration#i+1) + (1 ms-subframe_duration#j)}.

In option 2-3, the UE 200 may report the common TA drift rate to the LMF 300 via NRPPa. The UE 200 may report the common TA variation to the LMF 300 via NRPPa. The common TA drift rate and the common TA variation are values common to the subframes used in the measurement on the UE 200 side. For example, the common TA drift rate and the common TA variation may be values applied to the subframe where the measurement on the UE 200 side starts (for example, the subframe corresponding to the DL-PRS time). The change in the autonomous TA adjustment of the UE 200 may be estimated from the reported common TA drift rate or common TA variation, assuming that the UE 200 is stationary.

### (5.3) Operation example 3

In operation example 3, the UE 200 performs a specific report relating to the movement of the satellite 150. The specific report relating to the movement of the satellite 150 may be an example of a specific operation relating to the movement of the satellite 150. Specifically, the UE 200 reports a DL subframe variation (change value of DL subframe) to the LMF 300 via LPP. Since the DL subframe variation is affected by the movement of the satellite 150, it may be considered as an example of a specific report relating to the movement of the satellite 150. For operation example 3, the following options can be considered.

In option 3-1, the UE 200 reports the duration/length of each DL subframe. The DL subframes may be the respective DL subframes used in the measurement of the UE Rx-Tx time difference.

In option 3-2, the UE 200 reports the duration/length of any of the DL subframes. The DL subframes may be the respective DL subframes used in the measurement of the UE Rx-Tx time difference. The UE Rx-Tx time difference can be roughly estimated from the duration/length of the reported DL subframe.

In option 3-3, the UE 200 reports the difference in the duration/length of each DL subframe. For option 3-3, the following options can be considered.

In option 3-3-1, the UE 200 reports the difference in the duration/length between the adjacent DL subframes for each DL subframe (hereinafter, ΔT_subframe).

In option 2-1-2-2, the UE 200 reports the sum of the differences (ΔT_subframe) in the duration/length of the DL subframes (hereinafter, ΣΔT_subframe). ΔT_subframe is the difference in the TA values between the adjacent DL subframes.

In option 3-4, the UE 200 may report the drift rate (variation rate) of the duration/length for each DL subframe.

In option 3-5, the UE 200 reports the difference in the duration/length between each DL subframe and the normative subframe. The normative subframe serves as the reference subframe, and the duration/length of the normative subframe may be 1 ms. For option 3-5, the following options can be considered.

In option 3-5-1, the UE 200 may report the difference in the duration/length between the DL subframe and the normative subframe for each DL subframe. For example, when assuming the case illustrated in FIG. 9, the difference in the duration/length between the DL subframe and the normative subframe may be (1 ms - subframe_duration#i), (1 ms - subframe_duration#i+1), ..., (1 ms - subframe_duration#j). Note that the subframe_duration#n represents the duration/length corresponding to the DL subframe n.

In option 3-5-2, the UE 200 reports the sum of the differences in the durationg/length between the DL subframe and the normative subframe. The sum of the differences may be {(1 ms - subframe_duration#i) + (1 ms - subframe_duration#i+1) + (1 ms-subframe_duration#j)}.

### (6) Operation and effect

In the embodiment, the UE 200 performs the specific operation relating to improving the accuracy of the specific control (for example, Multi-RTT Positioning, DL-TDOA Positioning, or the like) for estimating the position information of the UE 200. This configuration makes it possible to estimate the position information of the UE 200 appropriately.

In the embodiment, the specific operation may include a specific operation relating to the autonomous TA adjustment of the UE 200 (for example, operation examples 1 and 2). This configuration makes it possible to estimate the position information of the UE 200 appropriately even when assuming the autonomous TA adjustment of the UE 200.

In the embodiment, the specific operation may include a specific operation relating to the movement of the satellite 150 constituting NTN (for example, operation example 3). This configuration makes it possible to estimate the position information of the UE 200 appropriately even when assuming the movement of the satellite 150 constituting NTN.

### (7) Other embodiments

Although the content of the present invention has been described in accordance with the above embodiment, it is obvious to those skilled in the art that the present invention is not limited to the description of the embodiment and that various modifications and improvements thereof are possible.

In the above disclosure, an example has been given of a case where the non-terrestrial network device that relays the UL signal or DL signal in NTN is the satellite 150. However, the disclosure described above is not limited to this configuration. The non-terrestrial network device may be any node that constitutes NTN in the air, which may be referred to as an aerial node, an aerial floating body, or an aerial flying body.

Although not specifically mentioned in the above disclosure, the measurement relating to the position of the UE 200 may include the measurement of the RSRP of the DL-PRS. The position measurement of the UE 200 may also include the measurement of the RSRP of the UL-SRS.

Although not specifically mentioned in the above disclosure, the following UE Capability may be defined. In addition, the UE Capability described below may be reported from the UE 200 to the gNB 100.

The UE Capability may include an information element indicating whether or not one or more operation examples selected from the operation examples 1 to 3 described above are supported. The UE Capability may include an information element indicating whether or not one or more options selected from the options described above are supported.

In the above disclosure, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-individual may be read interchangeably. Similarly, common, shared, group-common, UE-common, and UE-shared may be read interchangeably.

Note that the block diagrams (FIGS. 4-6) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)", a "transmitter", and the like. The method for implementing each component is not particularly limited as described above.

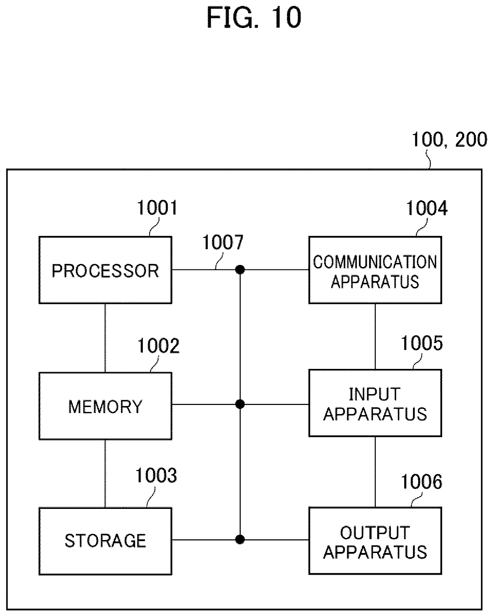

The eNB 100, the UE 200, and the LMF 300 (apparatuses) which are described above may function as a computer that executes the processes of the radio communication method of the present disclosure. FIG. 10 is a diagram to illustrating an example of a hardware structure of the apparatuses. As illustrated in FIG. 10, the apparatuses may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a unit, and so on can be interchangeably interpreted. The hardware structure of the apparatuses may be configured to include one or more of apparatuses shown in the drawings, or may be configured not to include part of apparatuses.

Each functional block of the apparatuses (see FIGS. 4-6) is implemented by any of hardware elements of the computer apparatus or a combination of the hardware elements.

Each function of the apparatuses is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of an optical disk such as a Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and other appropriate storage media. The storage 1003 may be referred to as "auxiliary storage apparatus". The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device", a "network controller", a "network card", a "communication module", and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the apparatuses may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB), and so on)), and other signals or combinations of these. Also, RRC signaling may be referred to as an "RRC message", and can be, for example, an RRC Connection Setup message, an RRC Connection Reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these, or combinations of these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with the base station, it is clear that various operations that are performed to communicate with the terminal can be performed by the base station, one or more network nodes (for example, MME, S-GW, and so on may be possible, but these are not limiting) other than the base station, or combinations of these. According to the above, a case is described in which there is a single network node other than the base station. However, a combination of multiple other network nodes may be considered (e.g., MME and S-GW) .

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and a term required for understanding of the present specification may be replaced by a term having the same or similar meaning. For example, at least one of a channel or a symbol may be a signal (signaling). Further, a signal may be a message. Further, the Component Carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "Base Station (BS)", a "radio base station", a "fixed station", a "NodeB", an "eNB (eNodeB)", a "gNB (gNodeB)", an "access point", a "transmission point", a "reception point", a "transmission/reception point", a "cell", a "sector", a "cell group", a "carrier", a "component carrier", and so on can be used interchangeably. The base station may be referred to as the terms such as a "macro cell", a "small cell", a "femto cell", a "pico cell", and so on.

The base station can accommodate one or a plurality of (for example, three) cells (also called sectors). When the base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of the base station and a base station subsystem that provides communication services within this coverage.

In the present disclosure, the transmission of information from the base station to the terminal may be interpreted as the instruction of control or operation to the terminal based on the information by the base station.

In the present disclosure, the terms "Mobile Station (MS)", "user terminal", "User Equipment (UE)", and "terminal" may be used interchangeably.

A mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other appropriate terms in some cases.

At least one of the base station and the mobile station may be referred to as a "transmitting apparatus", a "receiving apparatus", a "radio communication apparatus", and so on. Note that at least one of the base station and the mobile station may be a device mounted on a moving object, a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of the base station and the mobile station also includes an apparatus which does not necessarily move during communication operation. For example, at least one of the base station and the mobile station may be an Internet of Things (IoT) device such as a sensor.

Furthermore, the base station in the present disclosure may be interpreted as a user station (user terminal, the same applies hereinafter). For example, each aspect/embodiment of the present disclosure may be applied to the structure that replaces a communication between the base station and the user station with a communication between a plurality of user stations (for example, which may be referred to as "Device-to-Device (D2D)", "Vehicle-to-Everything (V2X)", and the like). In this case, the user stations may have the functions of the base station described above. The words such as "uplink" and "downlink" may be interpreted as the words corresponding to the terminal-to-terminal communication (for example, "side"). For example, an uplink channel, a downlink channel and so on may be interpreted as a side channel.

Likewise, the user station in the present disclosure may be interpreted as the base station. In this case, the base station may have the functions of the user station.

A radio frame may be constituted of one or a plurality of frames in the time domain. Each of one or a plurality of frames in the time domain may be referred to as a "subframe".

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a SubCarrier Spacing (SCS), a bandwidth, a symbol length, a cyclic prefix length, a Transmission Time Interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, the base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "Sub-Carrier Group (SCG)", a "Resource Element Group (REG)", a "PRB pair", an "RB pair" and so on.

Furthermore, a resource block may be constituted of one or a plurality of Resource Elements (REs). For example, one RE may correspond to a radio resource field of one subcarrier and one symbol.

A Bandwidth Part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up, search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Furthermore, "determining" may be regarded as "assuming", "expecting", "considering", and the like.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

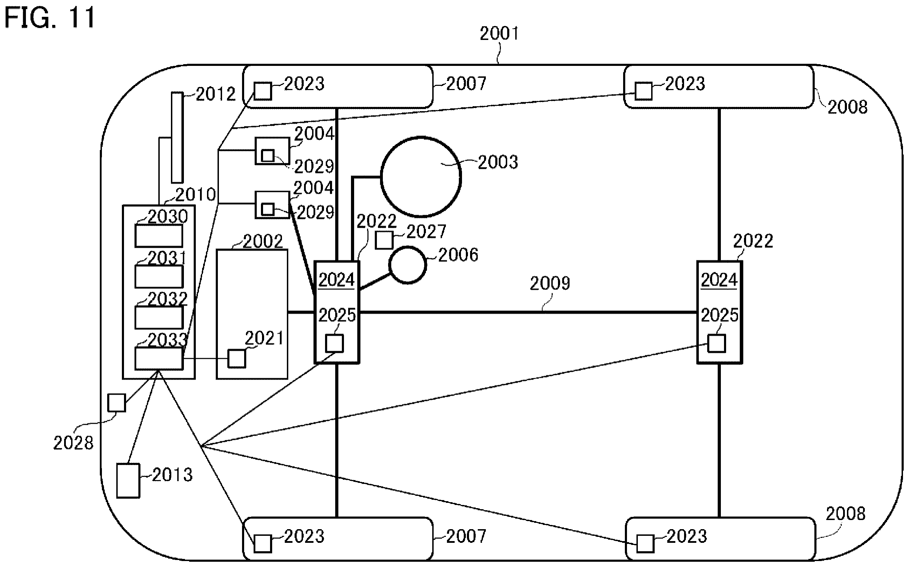

FIG. 11 illustrates an example of a configuration of a vehicle 2001. As illustrated in FIG. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021 to 2027 provided in the vehicle 2001. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices.

The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, and an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2028 provided in the vehicle 1.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits the current signal from the current sensor input to the electronic control unit 2010 to an external device through radio communication. Furthermore, the communication module 2013 transmits to an external device through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, which are inputted to the electronic control unit 2010.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2028, etc., mounted in the vehicle 2001.

As described above, the present disclosure has been described in detail. It is apparent to a person skilled in the art that the present disclosure is not limited to one or more embodiments of the present disclosure. Modifications, alternatives, replacements, etc., of the present disclosure may be possible without departing from the subject matter and the scope of the present disclosure defined by the descriptions of claims. Therefore, the descriptions of the present disclosure are for illustrative purposes only, and are not intended to be limitations to the present disclosure.

### (Supplementary Note)

The disclosure described above may be expressed as follows.

According to a first feature, there is provided a terminal including: a communication unit that performs communication of a reference signal via a non-terrestrial network; and a control unit that performs, in a specific control for estimating position information of the terminal based on the reference signal, a specific operation relating to improving an accuracy of the specific control.

According to a second feature, there is provided the terminal in the first feature, in which the specific operation includes a specific operation relating to an autonomous timing advance adjustment of the terminal.

According to a third feature, there is provided the terminal in the first or second feature, in which the specific operation includes a specific operation relating to a movement of a non-terrestrial network device constituting the non-terrestrial network.

According to a fourth feature, there is provided a base station including: a communication unit that performs communication of a reference signal via a non-terrestrial network; and a control unit that assumes that a terminal performs, in a specific control for estimating position information of the terminal based on the reference signal, a specific operation relating to improving an accuracy of the specific control.

According to a fifth feature, there is provided a radio communication system including a terminal and a base station, in which the terminal includes: a communication unit that performs communication of a reference signal via a non-terrestrial network; and a control unit that performs, in a specific control for estimating position information of the terminal based on the reference signal, a specific operation relating to improving an accuracy of the specific control.

According to a sixth feature, there is provided a radio communication method including: a step of performing communication of a reference signal via a non-terrestrial network; and a step of performing, in a specific control for estimating position information of a terminal based on the reference signal, a specific operation relating to improving an accuracy of the specific control.

### [Explanation of Reference Numerals]

- 10: radio communication system
- 20: NG-RAN
- 30: core network
- 100: gNB
- 100X: NTN gateway
- 110: receiving unit
- 120: transmitting unit
- 130: control unit
- 200: UE
- 210: radio signal transmitting and receiving unit
- 220: amplifier unit
- 230: modulation and demodulation unit
- 240: control signal and reference signal processing unit
- 250: encoding and decoding unit
- 260: data transmitting and receiving unit
- 270: control unit
- 300: LMF
- 1001: processor
- 1002: memory
- 1003: storage
- 1004: communication apparatus
- 1005: input apparatus
- 1006: output apparatus
- 1007: bus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A terminal comprising:
a communication unit that performs communication of a reference signal via a non-terrestrial network; and
a control unit that performs, in a specific control for estimating position information of the terminal based on the reference signal, a specific operation relating to improving an accuracy of the specific control.

2. The terminal according to claim 1, wherein
the specific operation includes a specific operation relating to an autonomous timing advance adjustment of the terminal.

3. The terminal according to claim 1, wherein
the specific operation includes a specific operation relating to a movement of a non-terrestrial network device constituting the non-terrestrial network.

4. A base station comprising:
a communication unit that performs communication of a reference signal via a non-terrestrial network; and
a control unit that assumes that a terminal performs, in a specific control for estimating position information of the terminal based on the reference signal, a specific operation relating to improving an accuracy of the specific control.

5. A radio communication system including a terminal and a base station, wherein
the terminal comprises:
a communication unit that performs communication of a reference signal via a non-terrestrial network; and
a control unit that performs, in a specific control for estimating position information of the terminal based on the reference signal, a specific operation relating to improving an accuracy of the specific control.

6. A radio communication method comprising:
a step of performing communication of a reference signal via a non-terrestrial network; and
a step of performing, in a specific control for estimating position information of a terminal based on the reference signal, a specific operation relating to improving an accuracy of the specific control.
